# EUROPÄISCHE PATENTSCHRIFT

(11) **EP 2 507 166 B1**
(45) Veröffentlichungstag und Bekanntmachung des Hinweises auf die Patenterteilung: **25.10.2017**
(21) Anmeldenummer: 10771438.8
(22) Anmeldetag: 28.10.2010
(51) Int. Cl.: C01B 17/54, C01B 17/76, C01B 17/50, C01B 17/60, C01B 17/765

(54) **VERFAHREN ZUR AUFARBEITUNG SCHWEFELHALTIGER ABGASE**
METHOD FOR PURIFYING SULPHURIC ACID
PROCÉDÉ DE PURICATION D'ACIDE SULFURIQUE

(30) Priorität: 01.12.2009 EP 09014862; 22.04.2010 DE 102010018172; 09.09.2010 DE 102010040482
(43) Veröffentlichungstag der Anmeldung: 10.10.2012
(73) Patentinhaber: Chemetics, Inc., Vancouver, British Columbia, V5M 0AS (CA)
(72) Erfinder: RISSE, Frank, 42781 Haan (DE); NEWRZELLA, Arnold, 46569 Hünxe (DE); FÖRTSCH, Dieter, 42799 Leichlingen (DE); KÜRTEN, Martin, 51465 Bergisch Gladbach (DE); PREDEL, Tim, 50733 Köln (DE); RUNOWSKI, Thomas, 40721 Hilden (DE)
(74) Vertreter: Beyer, Andreas
(86) Internationale Anmeldenummer: PCT/EP2010/066309
(87) Internationale Veröffentlichungsnummer: WO 2011/067046

(56) Entgegenhaltungen:
- EP-A2- 1 295 849
- WO-A1-01/36324
- WO-A1-2008/052649
- DE-B- 1 032 722
- US-A- 2 629 651
- US-A- 3 803 297

## Beschreibung

Gegenstand der vorliegenden Erfindung ist ein Verfahren zur Aufarbeitung schwefelhaltiger Ausgangsstoffe, insbesondere von Abgasen, wobei Schwefelsäure als Produkt gewonnen wird.

Fossile Brennstoffe, wie Erdgas, Kohle, Ölsand, Ölschiefer und Erdöl enthalten organische und anorganische Schwefelverbindungen.

Die Entfernung dieser Schwefelverbindungen ist nicht nur für die Weiterverarbeitung des Rohmaterials notwendig sondern dient vor allem auch der Verringerung der Luftverunreinigungen. Die gesetzlichen Anforderungen an die Restmengen von Schwefelverbindungen in Abgasen sind in den vergangenen Jahren erheblich gestiegen.

Für die Entfernung von Schwefelverbindungen aus Brennstoffen und Verbrennungsprodukten existiert eine Vielzahl von physikalischen und chemischen Umwandlungsprozessen.

Bei festen Brennstoffen werden die Schwefelverbindungen nach der Verbrennung im Kraftwerk als Schwefeldioxid durch eine Rauchgasentschwefelung vorwiegend mittels Kalkmilch absorbiert und in Calciumsulfit umgewandelt. Durch Oxidation mit im Abgas enthaltenem Restsauerstoff entsteht als Endprodukt Gips.

Bei flüssigen Brennstoffen, wie zum Beispiel Dieselkraftstoff oder leichtes Heizöl, sind maximal zulässige Schwefelgehalte vorgeschrieben. Die Entschwefelung dieser Brennstoffe wird bereits in den Raffinerien durchgeführt. Die im Rohöl vorhandenen Schwefelverbindungen werden im nach der Destillation wiedergefunden, wobei die so genannte Schwerölfraktion die höchsten Schwefelkonzentrationen aufweist. Die Entschwefelung erfolgt üblicherweise mit Hilfe von gasförmigem Wasserstoff. Die organischen Schwefelverbindungen werden dabei in Schwefelwasserstoff umgewandelt. Anschließend erfolgt die Entfernung des Schwefelwasserstoffs beispielsweise mittels einer Aminwäsche. Bei der Aminwäsche wird das als saures Gas (*sour gas* / *acid gas*) bezeichnete schwefelwasserstoffhaltige Prozessgas in einem Absorber an ein Amin gebunden. Es entsteht ein weitgehend von H₂S befreites Gas (*sweet gas*) und eine H₂S-beladene Aminlösung. Im Regenerator erfolgt die thermische Trennung der sauren Bestandteile vom Amin, so dass das Amin erneut zur Wäsche eingesetzt werden kann. Das aufkonzentrierte, schwefelwasserstoffhaltige Gas (Amine Acid Gas, AAG) weist H₂S-Konzentrationen bis 90 Vol.-% auf. Dieses Gas wird üblicherweise zur Gewinnung von Schwefel nach dem Claus-Verfahren eingesetzt (siehe unten).

In der petrochemischen Industrie fällt ferner das sogenannte Sour Water Stripper Gas (SWSG) an, das eine Zusammensetzung von etwa gleichen molaren Anteilen an Schwefelwasserstoff, Wasser und Ammoniak aufweist. Der hohe Anteil an gebundenem Stickstoff im Sour Water Stripper Gas kann bei der Verbrennung zu unerwünschten Stickoxiden führen.

Auch bei der Verbrennung von Kohle oder Schweröl in Kraftwerken, bei der der Brennstoff zuvor unter Sauerstoffmangel vergast wird, entsteht ein schwefelwasserstoffhaltiges Synthesegas, welches vor der Verbrennung gereinigt wird.

Schwefelwasserstoff kommt außerdem in unterschiedlichen Konzentrationen im Erdölbegleitgas und im Erdgas mit einem Anteil von bis zu 30 Vol.-% und im Abgas von Kläranlagen mit einem Anteil von bis zu 5 Vol.-% Schwefelwasserstoff vor.

Die industrielle Verwertung von Schwefelwasserstoff ist begrenzt. Daher wird er üblicherweise zunächst in elementaren Schwefel und anschließend in Schwefelsäure umgewandelt.

Liegt der Schwefelwasserstoff im Abgas in konzentrierter Form vor, d.h. mit Gehalten von mehr als 20 Vol.-%, so ist die Schwefel-Gewinnung nach dem so genannten Claus-Verfahren wirtschaftlich.

Das Claus-Verfahren umfasst die folgenden Reaktionsschritte:

2 H₂S + 3 O₂ → 2 SO₂ + H₂O

2 H₂S + SO₂ → 3 S + 2 H₂O

Technisch erfolgt die Schwefelerzeugung nach dem Claus-Verfahren in mehreren Stufen. In einer ersten Stufe wird H₂S in einem Verbrennungsapparat zu SO₂ verbrannt. Das dabei entstehende SO₂ reagiert in dem Verbrennungsapparat bereits zu einem Großteil mit verbliebenem H₂S zu Schwefel. Nach Abscheidung des Schwefels folgen eine oder mehrere katalytische Stufen zur weiteren Umsetzung von H₂S mit SO₂.

Beim Claus-Verfahren ist die Einhaltung der Stöchiometrie wichtig, da sonst überschüssiges SO₂ oder H₂S die Umwelt belasten kann.
Weiterhin erfolgt die Umsetzung von H₂S mit SO₂ im Claus-Verfahren unvollständig. Um den Schwefelrückhaltungsgrad weiter zu steigern, sind diverse Verfahren entwickelt worden, die das Abgas hinter den katalytischen Stufen von Schwefelverbindungen reinigen. Das bekannteste ist das so genannte SCOT-Verfahren (Shell Claus Offgas Treating).

Bei niedrigeren Konzentrationen von Schwefelwasserstoff im Abgas kann Elementarschwefel beispielsweise über eine Oxidationswäsche (z.B. nach dem Stretford-Verfahren) gewonnen werden.

Der Großteil des aus H₂S-haltigen Abgasen gewonnenen Schwefels wird weiter zu Schwefelsäure verarbeitet. Daher ist es unter Umständen vorteilhaft, Schwefelwasserstoff direkt zu Schwefeldioxid zu verbrennen und dann weiter unmittelbar zu Schwefeltrioxid zu oxidieren und nicht den Umweg über Schwefel (Claus-Verfahren) zu gehen.

Das so genannte WSA-Verfahren (WSA = *wet sulfuric acid*) wandelt schwefelwasserstoffhaltige Abgase direkt in Schwefelsäure um. Hierbei wird das schwefelwasserstoffhaltige Gas zunächst verbrannt und das wasser- und schwefeldioxidhaltige Gas anschließend einer katalytischen Oxidation zugeführt. Das dabei entstehende SO₃ reagiert mit dem vorhandenen Wasser zu gasförmigem H₂SO₄. Flüssiges H₂SO₄ wird anschließend durch Kondensation der gasförmigen Schwefelsäure gewonnen. Die Verbrennung von H₂S erfolgt mit Luft im ungekühlten Verbrennungsofen (Sulphur 312, Sept. /Okt. 2007, Seiten 80-85).

Großtechnisch erfolgt die Herstellung von Schwefelsäure üblicherweise entweder durch Verbrennung von elementarem Schwefel oder durch Rösten von Sulfiden, die bei der Verhüttung von Erzen der Nichteisenmetalle (vor allem Kupfer, Zink und Blei) anfallen. Das entstehende SO₂ wird dann üblicherweise in einem Kontaktverfahren katalytisch zu SO₃ oxidiert. Im Gegensatz zum WSA-Verfahren erfolgt die katalytische Umsetzung "trocken", d.h. in Abwesenheit signifikanter Mengen an Wasser. Anschließend wird Schwefeltrioxid üblicherweise in Schwefelsäure absorbiert. Die dabei entstehende hochkonzentrierte Schwefelsäure kann mit Wasser verdünnt und so Schwefelsäure mit jeder beliebigen Konzentration hergestellt werden. Handelsübliche Schwefelssäure hat eine Konzentration von mindestens 96 Gew.-% an H₂SO₄, da bei geringeren Konzentrationen die Korrosivität gegenüber vielen Materialien stark zunimmt.

Verwendung findet Schwefelsäure beispielsweise bei der Herstellung von Düngemitteln, in der Petrochemie, der Raffinerietechnik, der Chemie, der Farbstoffherstellung, im Bereich des Erzaufschlusses und in der Metallurgie.

Zusätzlich zu schwefelwasserstoffhaltigen Gasen fallen in der petrochemischen Industrie noch eine Reihe von weiteren schwefelhaltigen Abgasen an, welche ebenfalls aufgrund der Umweltrichtlinien (z.B. Bundes-Immissionsschutzgesetz) behandelt werden müssen.

Zu nennen sind beispielsweise schwefelhaltige Abgase aus dem Kalziner, welche eine relativ hohe Konzentration an SO₂ (bis zu 10000 ppm) aufweisen, oder Abgase, die beim Regenerationsschritt eines Fluid Catalytic Crackers in der Erdöl verarbeitenden Industrie anfallen und neben SO₂ noch Anteile an oxidierbaren Bestandteilen wie Kohlenmonoxid sowie höhere Anteile an Stickoxiden aufweisen, so dass eine Nachverbrennung erforderlich ist.

Darüber hinaus fallen hohe Mengen an Rauchgasen aus Verbrennungsprozessen an, welche ebenfalls beträchtliche Konzentrationen an SO₂ aufweisen. Diese werden bisher gemäß dem oben erwähnten Rauchgasentschwefelungsverfahren üblicherweise mit Kalkmilch behandelt, wobei große Mengen an Gips anfallen.

WO01/36324 A1 beschreibt die Herstellung von Schwefelsäure mittels Oxidation von SO₂ und anschließender Absorption des erhaltenen SO₃ in Wasser. Der Ausgangsstoff SO₂ wird durch Verbrennung von schwefelhaltigen Verbindungen in einem Brenner hergestellt, zum Beispiel durch Verbrennung von Schwefelwasserstoff. Das Verfahren ermöglicht die Verwendung von SO₂ mit niedriger Konzentration durch Absorption und Desorption des SO₂. Die Erhöhung der SO₂-Konzentration geschieht in einer Absorber-Stripper-Kombination.

Aus dem Stand der Technik ist auch das Dokument US2629651 A bekannt. US2629651 A beschreibt ein Verfahren zur Herstellung von Schwefelsäure aus Schwefelwasserstoff, wobei das SO₂-Gas vor der Umsetzung zu SO₃ aufkonzentriert wird. Durch das Kontaktieren mit 72 %iger Schwefelsäure wird das in dem Eduktgas anwesende Wasser entfernt und damit die SO₂-Konzentration erhöht.

EP1295849 A2 betrifft ein Verfahren zur kontinuierlichen Herstellung von Oleum einer Konzentration von 10 bis 45 Gew.-% SO₃ und / oder Schwefelsäure einer Konzentration von 94 bis 100 Gew.-% H₂SO₄ durch Verbrennung von Schwefel mit Luftsauerstoff nach dem Prinzip der überstöchiometrischen Verbrennung, Abkühlung der entstandenen schwefeldioxidhaltigen Gasen auf 350°C bis 500°C, katalytische Umsetzung dieser abgekühlten Gase zu schwefeltrioxidhaltigen Gasen an einem vanadiumhaltigen Katalysator unter Anwendung der Einfach- oder Doppelkontaktkatalyse, Absorption der schwefeltrioxidhaltigen Gase nach Abkühlung, gegebenenfalls Abtrennung von Flüssigkeiten aus den Gasen nach der Absorption und Energierückgewinnung, wobei flüssiger Schwefel in den heißen Verbrennungsgasstrom senkrecht zur-Hauptströmungsrichtung fächerförmig mittels einer oder mehrerer bimodaler Fächerdüsen eingedüst wird. EP1295849 A2 offenbart jedoch die Verbrennung von flüssigem Schwefel und gibt keine Hinweise zur Verbrennung von schwefelhaltigen Abgasen

Es kann somit festgehalten werden, dass ein fortwährender Bedarf besteht, Schwefelverbindungen aus verschiedenen Rohstoffen und Abgasen zu entfernen. Dabei sollte die Entschwefelung möglichst ohne großen energetischen und apparativen Aufwand erfolgen, da die entfernte Schwefelverbindung ein Produkt mit vergleichsweise niedrigem Wert ist. Die am häufigsten in der Industrie eingesetzte Schwefelverbindung ist Schwefelsäure, so dass ein Entschwefelungsverfahren, das Schwefelsäure zum Produkt hat, vorteilhaft ist. Der Umweg über Elementarschwefel, wie er heute bei der Entschwefelung in der Raffinerietechnik nach dem Claus-Verfahren üblich ist, ist weniger vorteilhaft.

Ausgehend vom beschriebenen Stand der Technik stellt sich daher die Aufgabe, ein Verfahren zur Aufarbeitung schwefelhaltiger Ausgangsstoffe, insbesondere von Abgasen bereitzustellen, bei dem Schwefelsäure als Produkt gewonnen wird. Das Verfahren soll kostengünstig in der Bereitstellung und im Betrieb sein. Es soll insbesondere der wirtschaftlichen Verwertung von schwefelhaltigen Prozessgasen aus der Entschwefelung von Rohstoffen der Raffinerietechnik und der Abgasreinigung dienen.

Erfindungsgemäß wird diese Aufgabe durch ein Verfahren gemäß dem unabhängigen Anspruch 1 gelöst. Bevorzugte Ausführungsformen finden sich in den jeweiligen abhängigen Ansprüchen.

Ein erster Gegenstand der vorliegenden Erfindung ist daher ein kontinuierliches Verfahren zur Gewinnung von Schwefelsäure umfassend die Schritte
I. Verbrennen eines schwefelhaltigen Abgases in einem Verbrennungsapparat unter Bildung eines schwefeldioxidhaltigen Prozessgases,
II. Aufkonzentrieren von SO₂,
III. katalytisches Oxidieren von SO₂ zu SO₃ in einer ersten Kontaktstufe,
IV. Absorbieren von SO₃,
V. gegebenenfalls Durchlaufen weiterer Kontaktstufen zur weiteren katalytischen Oxidation von SO₂ zu SO₃ mit gegebenenfalls anschließender Absorption von SO₃.

Eine bevorzugte Vorrichtung zur Gewinnung von Schwefelsäure des erfindungsgemäßen Verfahrens umfasst mindestens die folgenden Einheiten:
- einen Verbrennungsapparat zur Verbrennung eines schwefelhaltigen Abgases,
- Mittel zum Aufkonzentrieren von Schwefeldioxid,
- eine erste Kontaktstufe zur katalytischen Oxidation von SO₂ zu SO₃,
- einen Absorber zur Absorption von SO₃,
- ggf. eine oder mehrere weitere Kontaktstufen zur katalytischen Oxidation von SO₂ zu SO₃ mit nachgeschalteten Absorbern.

Ein kontinuierliches Verfahren im Sinne dieser Erfindung ist ein Verfahren, bei dem die Zugabe der Edukte in einen Reaktor und der Austrag der Produkte aus dem Reaktor gleichzeitig aber räumlich getrennt stattfinden, während bei einem diskontinuierlichen Verfahren die Reaktionsfolge Zugabe der Edukte, chemische Umsetzung und Austrag der Produkte zeitlich nacheinander ablaufen. Die kontinuierliche Verfahrensweise ist von wirtschaftlichem Vorteil, da Stillstandszeiten des Reaktors infolge von Befüllungs- und Entleerungsprozessen und lange Reaktionszeiten z.B. infolge sicherheitstechnischer Vorgaben oder infolge von Aufheiz- und Abkühlungsprozessen, wie sie bei Batch-Verfahren auftreten, vermieden werden.

Unter einem schwefelhaltigen Abgas wird ein Stoff oder Stoffgemisch verstanden, der/das Schwefel in chemisch gebundener Form enthält und mit Sauerstoff zu Schwefeldioxid umgesetzt werden kann. Beispiele sind Abgase mit Anteilen von Schwefelwasserstoff, Mercaptanen und/oder Kohlenstoffdisulfid. Unter den Begriff schwefelhaltiges Abgas fallen auch schwefeldioxidhaltige Gase, die thermisch behandelt werden müssen, um die darin enthaltenden störenden Komponenten (z.B. Kohlenmonoxid oder organische Komponenten) zu oxidieren. Dies kann beispielsweise das Abgas eines Regenerators bei Fluid Catalytic Crackern in der Erdöl verarbeitenden Industrie oder von Kalzinierprozessen sein.

Unter dem allgemeinen Begriff Schwefelsäure wird nachstehend jedes Gemisch oder jede Verbindung aus SO₃ und Wasser verstanden. Insbesondere umfasst der Begriff Schwefelsäure die Verbindungen aus der Reihe verdünnte Schwefelsäure, konzentrierte Schwefelsäure, hochkonzentrierte Schwefelsäure, Oleum und Dischwefelsäure.

Das erfindungsgemäße Verfahren liefert aus einem kontinuierlich zugeführten Gesamtstrom eines oder mehrerer schwefelhaltiger Ausgangsstoffe und Sauerstoff das Produkt Schwefelsäure.

In einem ersten Schritt werden die Ausgangsstoffe dabei zu Schwefeldioxid verbrannt. Das gewonnene Schwefeldioxid wird in einem weiteren Schritt katalytisch zu Schwefeltrioxid umgesetzt.
In einem adiabat geführten Prozess zur katalytischen Oxidation von SO₂ zu SO₃ muss die Ausgangsgaseintrittstemperatur T > 380 °C und der SO₂-Gehalte bei > ca. 5 Vol. % liegen (siehe z.B. WO2008/052649A1).

Bei der Verbrennung einer Vielzahl schwefelhaltiger Abgase entsteht jedoch ein Prozessgas mit einer geringeren Konzentration an Schwefeldioxid. Erfindungsgemäß erfolgt daher im Anschluss an den Verbrennungsschritt zur Bildung eines SO₂-haltigen Gases eine Aufkonzentration des Schwefeldioxids, bevor das Schwefeldioxid einer Kontaktstufe zugeführt wird.

Bei der Aufkonzentrierung wird erfindungsgemäß ein Gas mit einem Anteil von mindestens 5 Vol.-% an Schwefeldioxid erzeugt. Dieses Gas kann einer klassischen Kontaktstufe zur katalytischen Oxidation, wie sie beispielhaft in Ullmanns Encyclopedia of Industrial Chemistry beschrieben ist, zugeführt werden.

Vorzugsweise wird bei der Aufkonzentrierung ein Gas mit einem Anteil von mindestens 13,5 Vol.-% an Schwefeldioxid erzeugt, da ein solches Gas einem Röhrenkontaktapparat zugeführt werden kann. Ein Röhrenkontaktapparat, der beispielhaft in WO2008/052649A1 beschrieben ist, ermöglicht eine besonders kompakte Anlage zur Schwefelsäureherstellung, da ihm Kontaktgase mit einem Schwefeldioxidgehalt von bis zu 66 Vol.-% zugeführt werden können.

Das erfindungsgemäße Verfahren wird vorzugsweise zur Gewinnung von Schwefelsäure aus schwefelwasserstoffhaltigen Abgasen eingesetzt. Ein bevorzugter Ausgangsstoff ist daher das saure Gas, das aus einer Aminwäsche resultiert (Amine Acid Gas, AAG, siehe z.B A. J. Kidnay, William R. Parrish: Fundamentals of Natural Gas Processing, CRC Press, 2006). Ein solches Gas weist üblicherweise einen Anteil von 80-90 Mol-% H₂S auf. Weitere Bestandteile sind üblicherweise CO₂, H₂O, Kohlenwasserstoffe und/oder Amine.

Ein weiterer bevorzugter Ausgangsstoff ist das aus einem Sour-Water-Stripper resultierende Gas, das in etwa die molare Zusammensetzung 1/3 H₂S, 1/3 H₂O und 1/3 NH₃ aufweist. Dieses wird auch als Sour Water Stripper Off-Gas bezeichnet (siehe beispielsweise Arthur Kohl, Richard Nielsen: Gas Purification, Fifth Edition, Gulf Publishing Company, 1997).

Wie oben beschrieben können dem Verbrennungsapparat auch SO₂-haltige Gase, die oxidierbare Bestandteile aufweisen, zugeführt werden.

Zur Verbrennung des schwefelhaltigen Abgases in Schritt 1 wird ein sauerstoffhaltiges Verbrennungsgas, vorzugsweise Luft verwendet.

Die Verbrennung erfolgt vorzugsweise in einem nicht-adiabaten Verbrennungsapparat. Der Verbrennungsapparat ist vorzugsweise ein wandgekühlter Wasserrohrkessel (Rohr-Steg-RohrKonstruktion). Wasserrohrkessel sind dem Fachmann der chemischen Verfahrenstechnik aus dem Stand der Technik bekannt (siehe z.B. Dubbel interaktiv, Taschenbuch für den Maschinenbau, L.6.1.1.). Die intensive Kühlung der Wandungen sorgt dafür, dass die Wandtemperatur unterhalb der durch Eisensulfidbildung gekennzeichneten Temperatur von etwa 480°C bleibt, auch wenn in den Verbrennungszonen Temperaturen von bis zu 2000°C herrschen. Die Wandtemperatur liegt vorzugsweise im Bereich von 200°C bis 400°C, bevorzugt im Bereich von 240°C bis 350°C.

Der Verbrennungsapparat weist mindestens einen Einlass für das Verbrennungsgas und mindestens einen Auslass für das gewonnene Prozessgas auf. Zwischen dem Einlass und dem Auslass befinden sich eine oder vorzugsweise mehrere Verbrennungszonen. Das Verbrennungsgas wird durch den Einlass in den Verbrennungsapparat gefördert und durchläuft eine oder mehrere Verbrennungszonen. In die Verbrennungszonen werden schwefelhaltige Abgase in das Verbrennungsgas eingedüst, um sie zu verbrennen.

Die über den Hauptgasstrom eingegebene Menge an Sauerstoff ist vorzugsweise so eingestellt, dass der dem Verbrennungsapparat zugeführte Sauerstoff am Ausgang des Verbrennungsapparates nahezu aufgebraucht ist, um die Anlagengröße zu minimieren. Der Sauerstoff für die nachfolgende katalytische Oxidation von Schwefeldioxid zu Schwefeltrioxid in Schritt III und ggf. V wird direkt in diese Stufen gefahren.

Die Verbrennung wird so gefahren, dass eine maximale Temperatur von 2000°C erreicht wird. Bei der Verwendung von Ausgangsstoffen, bei denen die adiabate Flammentemperatur auf Werte oberhalb von 2000°C steigen würde, ist es vorteilhaft, die Verbrennung auf mehrere Verbrennungszonen aufzuteilen. Jeder Verbrennungszone ist dann ein Wärmeübertrager zur Kühlung des Prozessgases nachgeschaltet. In und zwischen den Verbrennungszonen wird somit ein Teil der bei der Umsetzung entstehenden Reaktionswärme abgeführt, so dass die maximale Temperatur innerhalb der Verbrennungszonen den Wert von 2000°C nicht übersteigt. Die Zahl der Verbrennungszonen liegt üblicherweise im Bereich von 2 bis 8.

Die Zahl der Zugabestellen für schwefelhaltige Abgase pro Verbrennungszone liegt bevorzugt im Bereich von 1 bis 8.

Stickstoffhaltige Verbindungen in dem schwefelhaltigen Abgas, wie beispielsweise Ammoniak, können bei der Verbrennung zur Bildung von unerwünschten Stickoxiden führen. Die Verbrennung wird daher, angepasst an den verwendeten schwefelhaltigen Ausgangsstoff, vorzugsweise so gefahren, dass keine Stickoxide entstehen.

Vorzugsweise werden diejenigen schwefelhaltigen Ausgangsstoffe, die stickstoffhaltige Verbindungen enthalten, unter lokal herrschenden reduzierenden Bedingungen verbrannt. Dabei erfolgt die Dosierung und Verbrennung dieser stickstoffhaltigen Ausgangsstoffe in den Verbrennungsapparat so, dass in der Flamme reduzierende Bedingungen herrschen. Das bedeutet, dass in der Flamme weniger Sauerstoff vorhanden ist als für die vollständige Verbrennung des schwefel- und stickstoffhaltigen Ausgangsstoffes benötigt wird (unterstöchiometrische Bedingungen in Bezug auf Sauerstoff). Dabei herrschen in der Verbrennungszone im Mittel, und insbesondere am Ende Verbrennungszone (in Strömungsrichtung gesehen) überstöchiometrische Bedingungen in Bezug auf Sauerstoff und die reduzierenden Bedingungen sind lokal auf die Flamme beschränkt. Durch diese reduzierenden Bedingungen in der Flamme wird die Bildung von Stickoxiden unterdrückt.

Die reduzierenden Bedingungen in der Flamme können beispielsweise durch Einsatz so genannter Low-NOₓ-Brenner erzeugt werden, die dem Fachmann der Verbrennungs- und Energietechnik hinlänglich bekannt sind (siehe z.B. Prabir Basu et al., Boilers and Burner: Design and Theory, Mechanical Engineers Series, Springer-Verlag, 2000, Kapitel 9-9).

Der Begriff stickstoffhaltige Verbindungen bezieht sich hier auf Verbindungen, in denen Stickstoff chemisch gebunden und nicht elementar als N₂ vorliegt. Beispiele für stickstoffhaltige Verbindungen sind NH₃ oder Amine. Bei ihrer Verbrennung besteht die Gefahr der Bildung von NOₓ. Ein schwefelhaltiger Ausgangsstoff mit gebundenem Stickstoff ist ein Stoff oder Stoffgemisch, der/das neben mindestens einer schwefelhaltigen Verbindung mindestens eine stickstoffhaltige Verbindung mit chemisch gebundenem Stickstoff enthält. Ein Beispiel ist Sour Water Stripper Gas, das sich aus in etwa gleichen molaren Anteilen von H₂S, NH₃ und H₂O zusammensetzt.

In einer bevorzugten Ausführungsform des erfindungsgemäßen Verfahrens liegen mindestens zwei Verbrennungszonen vor. In die erste Verbrennungszone wird ein schwefelhaltiger Ausgangsstoff mit gebundenem Stickstoff dosiert und in einer lokalen Reduktionszone verbrannt. In die letzte Verbrennungszone wird elementarer Schwefel dosiert. Hier führt die Zugabe von Schwefel zur Reduktion von NOₓ, das entweder bei der Verbrennung entstanden oder bereits in einem Ausgangsstoff vorhanden war.
Die selektive nicht-katalytische Reduktion von NOₓ durch Schwefel wurde in adiabaten Brennkammern bereits nachgewiesen und in einer nicht-adiabaten Brennkammer in dem sehr engen Temperaturfenster von 500 °C bis 700 °C eingesetzt (siehe z.B. EP1295849A2). Überraschend wurde jedoch festgestellt, dass die selektiv-reduzierende Wirkung des Schwefels über einen weiten Temperaturbereich effektiv ist, so dass sie für das erfindungsgemäße Verbrennungsverfahren in einem vorzugsweise nicht-adiabaten Verbrennungsapparat eingesetzt werden kann. Dies geschieht vorzugsweise durch Zugabe von Schwefel in der letzten Verbrennungszone, in der Verbrennungstemperaturen im Bereich 400 °C bis 1200 °C, bevorzugt im Bereich 600°C bis 1000 °C, besonders bevorzugt oberhalb von 700°C und unterhalb von 1000°C vorherrschen.

Das den Verbrennungsapparat verlassende Prozessgas enthält im Wesentlichen Schwefeldioxid, Stickstoff und Wasser und es wird im oder hinter dem Verbrennungsapparat auf eine Temperatur von 300°C bis etwa 420°C gekühlt. Die abgeführte Wärme kann beispielsweise zur Erzeugung von Hochdruck-Dampf bei z.B. 30 bar verwendet werden. Dadurch ergibt sich ein hoher energetischer Wirkungsgrad des Gesamtverfahrens.

An die Verbrennung schließt sich der Aufkonzentrierungsschritt für Schwefeldioxid an.

In einer bevorzugten Ausführungsform erfolgt die Aufkonzentrierung mittels Absorption von Schwefeldioxid aus dem Prozessgas und anschließender Desorption. Dazu wird das Prozessgas in einer Absorptionskolonne mit einem geeigneten Absorptionsmittel in Kontakt gebracht, welches das Schwefeldioxid selektiv absorbiert. Dabei kann es sich beispielsweise um eine Mischung aus einem oder mehreren Aminen und Wasser handeln. Denkbar sind ebenfalls Absorptionsmittel auf der Basis von Ethern oder ionischen Flüssigkeiten.

Die Absorption des Schwefeldioxids erfolgt wie dem Fachmann bekannt beispielsweise in einer Füllkörper- oder Packungs-Kolonne, in der vorzugsweise das Absorptionsmittel und das zu trennende N₂/SO₂/H₂O-Gemisch aus Schritt I im Gegenstrom geführt werden. Zur Vermeidung einer Schädigung der Kolonne wird das N₂/SO₂/H₂O -Gemisch aus Schritt I zuvor abgekühlt. Dies erfolgt wie dem Fachmann bekannt beispielsweise in einer Quenche, in die der Flüssigkeitsablauf der Absorptionskolonne eingedüst wird und die mittels Verdunstungskühlung den heißen Gasstrom aus Schritt I kühlt. In einer bevorzugten Ausführungsform wird das Rauchgas vor der Absorption in einer Quenche auf eine Temperatur im Bereich von 30°C bis 60 °C mit dem Absorptionsmittel gekühlt, welches aus der Absorptionskolonne abläuft.

Das Absorptionsmittel nimmt bei der Absorption nahezu das gesamte Schwefeldioxid aus dem Prozessgasstrom auf, so dass nur noch wenige ppm SO₂ im Abgas der Absorptionskolonne zu finden sind. Dieser Abgasstrom kann daher in die Umgebung abgeführt werden.

Das mit Schwefeldioxid beladene Absorptionsmittel wird anschließend einer Desorptionskolonne zugeführt, in der das gelöste SO₂ wieder aus dem Absorptionsmittel herausgelöst wird. Dies kann beispielsweise durch Wärmezufuhr und/oder Druckabsenkung und/oder durch direktes Strippen mit Wasserdampf erfolgen. Dabei wird zur optimalen Wärmeintegration direkt der in Schritt I gewonnene Hochdruck-Dampf verwendet.

Am Kopf der Desorptionskolonne fällt ein hochkonzentrierter Schwefeldioxidstrom an, welcher über einen rekuperativen Wärmetauscher auf die gewünschte Reaktionstemperatur vorgewärmt und dann in die erste Kontaktstufe geführt wird.
Am Boden der Desorptionskolonne fällt das SO₂-arme Absorptionsmittel an, welches im Kreislauf über den Absorptionsmitteltank zurück zur Absorptionskolonne gefahren wird.

Das für die Reaktion in der ersten Kontaktstufe notwendige sauerstoffhaltige Verbrennungsgas wird vorzugsweise zunächst dazu verwendet, die produzierte Schwefelsäure zu strippen, da diese in den SO₃-Absorptionen auch geringe Anteile an unerwünschtem SO₂ gelöst hat.

Das Verbrennungsgas strippt das gelöste SO₂ aus der Schwefelsäure und wird dann der ersten Kontaktstufe zur katalytischen Oxidation von SO₂ zu SO₃ zugeführt. Das Strippen der Schwefelsäure kann wie dem Fachmann bekannt in einer Blasensäule oder einer gepackten Kolonne erfolgen.

Es ist denkbar, weitere SO₂-haltige Ströme in das erfindungsgemäße Verfahren zu integrieren. So fallen beispielsweise in Kraftwerken oder Kalzinern Gase mit einer SO₂-Konzentration von bis zu 10.000 ppm an. Diese werden vorteilhaft direkt in die SO₂-Absorptionsstufe gefahren.

Anstelle oder zusätzlich zu der Absorption/Desorption von Schwefeldioxid zur Aufkonzentrierung von Schwefeldioxid ist es auch möglich, die Schwefeldioxidkonzentration durch Zugabe von Schwefeldioxid aus einem anderen Prozess oder durch Verbrennung weiterer schwefelhaltiger Ausgangsstoffe zu erhöhen. So ist es beispielsweise denkbar, neben dem schwefelhaltigen Abgas eine schwefelhaltige Verbindung wie beispielsweise elementaren Schwefel zu verbrennen, um am Eingang der ersten Kontaktstufe eine höhere Konzentration von SO₂ zu erhalten. Elementarer Schwefel fällt beispielsweise in Claus-Anlagen von Raffinerien in großen Mengen an.

In Schritt III (und ggf. Schritt V) des erfindungsgemäßen Verfahrens wird Schwefeldioxid weiter zu Schwefeltrioxid umgesetzt. Die Umsetzung zu Schwefeltrioxid erfolgt mittels eines Kontaktverfahrens.

Das der ersten Kontaktstufe zugeführte Gasgemisch enthält vorzugsweise Schwefeldioxid und Sauerstoff im Volumenverhältnis von 0,5 bis 1,5, bevorzugt von 0,8 bis 0,9. Der Schwefeldioxidanteil beträgt mindestens 5 Vol.-%, vorzugsweise mindestens 13,5 Vol.-%, ganz besonders bevorzugt liegt er zwischen 15 und 25 Vol. %.

Liegen die Schwefeldioxidkonzentrationen unterhalb von 13,5 Vol.-% ist der Einsatz einer klassischen Kontaktstufe (beschrieben z.B. in Ullmanns Encyclopedia of Industrial Chemistry) denkbar.

Vorzugsweise wird mindestens ein Röhrenkontaktapparat, wie er beispielhaft in WO2008/052649A1 beschrieben ist, verwendet. Einem solchen Röhrenkontaktapparat können Kontaktgase mit einem Schwefeldioxidgehalt von bis zu 66 Vol.-% zugeführt werden, da der Röhrenkontaktapparat durch eine intensive Wärmeabfuhr gekennzeichnet ist.

Um die Reaktionsrohre des Röhrenkontaktapparats quasi-isotherm zu betreiben, erfolgt mittels eines Kühlmediums, das durch die Außenrohre geführt wird, eine kontinuierliche Wärmeabfuhr. Vorzugsweise erfolgt die Wärmeabfuhr über einen Zwischenkreislauf. Durch den Zwischenkreislauf wird die Wärme von den Reaktionsrohren abgeführt und in einem nachgeschalteten indirekten Wärmeübertrager an ein weiteres Medium zur energetischen Nutzung übertragen. Somit erfolgt beispielsweise eine energetische Nutzung zur Dampferzeugung nicht unmittelbar durch die an den Reaktionsrohren frei werdende Wärme sondern erst durch die vom Zwischenkreislauf übertragene Wärme.
Die Führung des Kühlmediums kann in Gegen- oder Gleichstrom erfolgen. Aufgrund des exothermen Reaktionsverlaufs ist die vorzugsweise Ausgestaltung die Gleichstromführung. Sie bietet deutliche Vorteile in Bezug auf die sichere Vermeidung von lokalen Temperaturüberschreitungen am Katalysator und bezüglich des Massenstroms des im Kreislauf zu führenden Kühlmediums.

Als Kühlmedium für die indirekte Wärmeabfuhr über den Zwischenkreislauf können grundsätzlich in Betracht gezogen werden: Wärmeträgeröle, Salzschmelzen, Salzlösungen, Dampf, Gase und/oder Luft.

Die aus dem Kühlkreislaufbetrieb im Temperaturniveau von etwa 220°C bis 550°C bevorzugt von 300°C bis 450°C abzuführende Wärme kann über einen Wärmetauscher bevorzugt als Dampf zur weiteren betrieblichen Verwendung ausgekoppelt werden.

Üblicherweise besteht der Katalysator in den Reaktionsrohren aus einem katalytisch aktiven Metall oder einem Metallderivat, das, ggf. mit Promotoren versehen, auf einem inerten, temperaturbeständigen Katalysatorträgermaterial aufgetragen ist. Beispielsweise ist der Katalysator V₂O₅ mit Kalium- und Natriumsalzen auf SiO₂ geträgert. Alternativ kann auch handelsüblicher mit Cäsium dotierter Vanadiumpentoxidkatalysator eingesetzt werden.

Das sich im Schritt III (und ggf. Schritt V) des erfindungsgemäßen Verfahrens einstellende Temperaturfenster und insbesondere Temperaturmaximum wird innerhalb festgelegter Grenzen bezüglich der Schwefeldioxidkonzentration im Wesentlichen in der Designphase festgelegt. Wesentliche Parameter für das Design sind Gaseintrittstemperatur, Gasgeschwindigkeit, Katalysatorverdünnung, Rohrgeometrie und Kühlleistung.

Die Bedingungen werden üblicherweise so gewählt, dass der Katalysator beim Einsatz eines Vanadiumpentoxidkatalysators mit oder ohne Cäsium an keiner Stelle den schädlichen Grenzwert von 640°C überschreitet. Bevorzugt werden die Bedingungen so gewählt, dass sich über die Rohrlänge ein Temperaturprofil einstellt, bei dem die Eintrittstemperatur im Bereich von 380°C bis 450°C, vorzugsweise 400°C bis 450°C und die Austrittstemperatur im Bereich von 430°C bis 500°C liegt, sowie das Temperaturmaximum nicht höher als 580 °C liegt.

Zur Verbesserung des Temperaturprofils über die Schütthöhe des Katalysators kann der Katalysator mit einem temperaturbeständigen Inertmaterial insbesondere dem reinen Katalysatorträgermaterial vermischt werden, wie z. B. mit Glas, SiO₂, Al₂O₃ oder sonstigen üblichen Oxiden, Keramik, Silicagel oder Zeolithe, bevorzugt Glas und Keramik.
Üblicherweise wird der eingesetzte Katalysator in seiner Reaktivität durch Mischen mit dem Inertmaterial im Mengenverhältnis 1:100 bis 100:1 voreingestellt. Bevorzugt werden Inertmaterial und Katalysator in Mengenverhältnissen 90:10 bis 40:60, besonders bevorzugt 80:20 bis 40:60 vermischt.

Im Röhrenkontaktapparat wird das SO₂ zu etwa 80 % mit dem überstöchiometrisch vorhandenen Sauerstoff zu SO₃ umgesetzt. Die Wärme der stark exothermen Reaktion wird im Rohrbündelreaktor auf der Mantelseite durch einen Wärmeträger abgeführt, so dass das Produktgas den Reaktor mit einer Temperatur von ca. 480 °C verlässt. Der Wärmeträgerkreislauf erzeugt beispielsweise wiederum Hochdruck-Dampf.
Das aus der katalytischen Umsetzung resultierende Gasgemisch wird in Schritt IV des erfindungsgemäßen Verfahrens einem Absorber zugeführt, um das gebildete SO₃ zu entfernen. Die Absorption geschieht vorzugsweise unter Verwendung von Schwefelsäure, die im Prozess gewonnen und im Gegenstrom zum Prozessgas geführt wird.

In dieser ersten Absorptionsstufe kann die SO₃-Konzentration so hoch sein, dass eine konventionelle Absorptionskolonne die frei werdende Absorptionswärme nicht abführen kann.

In einem solchen Fall wird bei der ersten Absorption eine Fallfilmkolonne verwendet. Dabei handelt es sich um ein vertikales Rohrbündel, welches von oben mit Schwefelsäure und von unten mit dem Gas beaufschlagt wird. Die Schwefelsäure läuft in den Rohren als dünner Film ab und reagiert mit dem SO₃ aus dem Gasstrom zu Schwefelsäure. Die frei werdende Wärme wird mantelseitig mit Kühlwasser abgeführt.

Das aus dem ersten Röhrenkontaktapparat resultierende Gasgemisch weist üblicherweise ein Massenverhältnis von SO₂:SO₃ im Bereich von 1:50 bis 1:2, bevorzugt im Bereich von 1:7 bis 1:3 und ganz bevorzugt 1:6 bis 1:4 auf. Das heißt, das aus der ersten Kontaktstufe resultierende Gas weist eine merkliche Restmenge an nicht umgesetztem Schwefeldioxid auf. Das Gasgemisch weist ferner Restmengen an Sauerstoff und gegebenenfalls weitere Bestandteile auf.

In einer bevorzugten Ausführungsform des erfindungsgemäßen Verfahrens sind dem Röhrenkontaktapparat ein oder mehrere Zwischenabsorber und eine oder mehrere weitere Kontaktstufen nachgeschaltet, um SO₃ aus dem Reaktionsgas zu entfernen und die Restmengen von SO₂ im Prozessgas zu reduzieren.

Die SO₃-Konzentrationen nach weiteren Kontaktstufen sind üblicherweise niedrig genug, um in einer gepackten Kolonne absorbiert zu werden.

Die weiteren Kontaktstufen können Röhrenkontaktapparate sein. Es ist aber auch denkbar, dass es sich bei diesen Kontaktstufen um konventionelle Horden handelt, wie sie zur katalytischen Oxidation von SO₂ zu SO₃ üblicherweise verwendet werden.

Ein Röhrenkontaktapparat eignet sich aufgrund der intensiven Wärmeabfuhr insbesondere bei hohen Schwefeldioxideingangskonzentrationen (siehe WO2008/052649A1). Nach Durchlaufen von zwei Röhrenkontaktapparaten ist die Konzentration an SO₂ im Gasstrom auch bei hohen SO₂-Anfangskonzentrationen in der Regel so weit reduziert, dass eine weitere Reaktion zu SO₃ in konventionellen Horden durchgeführt werden kann. Bei den hier noch geringen SO₂-Konzentrationen kann der erzielbare Umsatz durch eine entsprechende Katalysatorschicht eingestellt werden.

Zwischen den einzelnen Kontaktstufen erfolgt jeweils eine Absorption von SO₃ mit Schwefelsäure aus dem Prozess.

Die weiteren Absorptionsstufen nach dem Fallfilmabsorber können aufgrund der relativ geringen SO₃-Konzentration als gepackte Kolonne ausgeführt werden. Hier wird der Gasstrom mit Schwefelsäure aus dem Produkttank im Gegenstrom gefahren.

Die Schwefelsäure wird nach den Absorptionsstufen der konventionellen Horden und bevor sie in den Fallfilmabsorber gelangt, zurück auf 40°C gekühlt, da in diesem Apparat der Großteil der bei der Reaktion von SO₃ und H₂O zu H₂SO₄ frei werdenden Wärme im Verfahren frei wird.

Vorzugsweise erfolgt eine Wärmerückgewinnung an unterschiedlichen Positionen des Prozesses für das Erzeugen von Dampf, Warmwasser und/oder elektrischer Energie. Das erfindungsgemäße Verfahren eignet sich daher besonders zur Umsetzung von schwefelhaltigen Abgasen aus einer Raffinerie, da die Raffinerie durch einen hohen Energiebedarf gekennzeichnet ist. Die Rückführung von Energie aus der erfindungsgemäßen Schwefelsäureherstellung in das Raffinationsverfahren und/oder Entschwefelungsverfahren führt daher zu einer günstigen Energiegesamtbilanz.

Da der im Prozessgas enthaltene Wasseranteil in der Absorptionskolonne nahezu vollständig entfernt wird, muss die Schwefelsäurekonzentration im Produkt- und Kreisstrom ständig gemessen und mittels der Zugabe von Wasser geregelt werden. Bevorzugte Schwefelsäure-Konzentrationen sind solche zwischen 96 und 100 Gew.-% H₂SO₄.

Zusammenfassend lässt sich festhalten, dass die vorliegende Erfindung einen innovativen Ansatz darstellt, um die steigenden Mengen an Schwefel in Abgasen aufgrund des erhöhten Schwefelanteils in fossilen Brennstoffen und die immer strenger werdenden Auflagen bzgl. des Schwefels in Abgasen zu bewältigen.
Weitere Einsatzpotentiale liegen in der Verarbeitung von anderen schwefelhaltigen Abgasen, wie z.B. Rauchgasen oder Kalzinerabgasen.

Das erfindungsgemäße Verfahren erreicht eine sehr hohe Abgasreinheit, so dass eine Restgasbehandlung wie beim Claus-Prozess nicht erforderlich ist. Hier liegt ein großes Einsparungspotential im Vergleich zum etablierten Claus-Prozess. Auf der Seite der Betriebskosten sollte zum einen das Produkt Schwefelsäure einen höheren Preis erzielen als der elementare Schwefel. Zum anderen wird im erfindungsgemäßen Verfahren bei Verbrennung schwefelwasserstoffhaltiger Abgase der gesamte Schwefelwasserstoff oxidiert, anders als beim Claus-Prozess, in dem nur etwa die Hälfte umgesetzt wird, da die andere Hälfte für die Reaktion in den katalytischen Stufen benötigt wird. Daher wird in der Verbrennungsstufe des erfindungsgemäßen Verfahrens nahezu die doppelte Menge an Wärme frei, welche zur Erzeugung von hochwertigem Dampf verwendet werden kann.
Ein wichtiges Element der vorliegenden Erfindung ist die Verwendung eines Röhrenkontaktapparates, der es ermöglicht, SO₂-haltiges Gas auch bei hohen SO₂-Konzentrationen zu oxidieren. Durch den Einsatz eines Röhrenkontaktapparates wird eine kompakte und effiziente Anlage realisiert. In dem gekühlten Rohrbündelreaktor wird die frei werdende Reaktionswärme aus dem Katalysatorbett kontinuierlich abführt. Im konventionellen Doppelkontaktverfahren können Gase nur bis zu einer Konzentration bis zu 13 Vol.-% SO₂ verarbeitet werden. Höhere SO₂-Konzentrationen führen zu unzulässig hohen Temperaturen.
Die Oxidation von SO₂ zu SO₃ mit anschließender Absorption und der Herstellung von Schwefelsäure produziert im Vergleich zum Claus-Prozess zusätzlich wertvolle Wärme, welche wiederum zur Erzeugung von hochwertigem Dampf verwendet werden kann.

Die Erfindung wird nachstehend beispielhaft näher erläutert ohne sie jedoch auf die beschriebenen Merkmale zu beschränken.

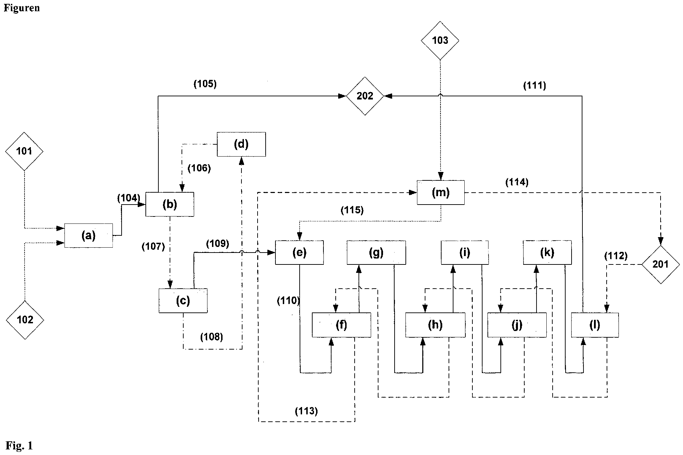

**Figur 1** zeigt schematisch eine bevorzugte Ausführungsform der hier beschriebenen Vorrichtung als Blockschaltbild (siehe Beispiel).

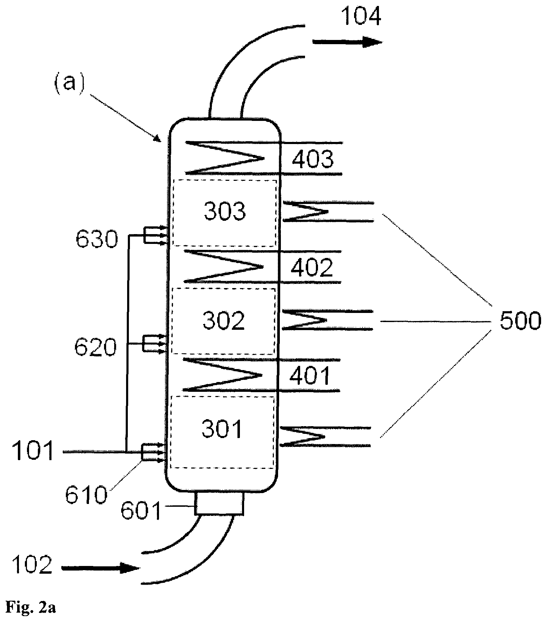

**Figur 2a** zeigt schematisch eine bevorzugte Ausführungsform des hier beschriebenen Verbrennungsapparats (a). Über einen unteren Einlass (601) wird das O₂-haltige Verbrennungsgas (102) in den Verbrennungsapparat gefördert. Die Zuführung der Schwefelverbindung (101) erfolgt entlang der Strömungsrichtung in drei aufeinanderfolgenden Verbrennungszonen (301, 302, 303, dargestellt durch gestrichelte Linien). Die Zuführung der Schwefelverbindung (101) erfolgt dabei jeweils seitlich (610, 620, 630). Die Verbrennungszonen sind nicht-adiabat ausgeführt, was im vorliegenden Fall u.a. durch eine Wandkühlung (500) realisiert wird. Zwischen den Verbrennungszonen sind ferner Wärmetauscher zur Kühlung angeordnet (401, 402). Im Anschluss an die letzte Verbrennungszone (303) erfolgt eine weitere Kühlung (403), bevor das Reaktionsgas (104) den Verbrennungsapparat verlässt.

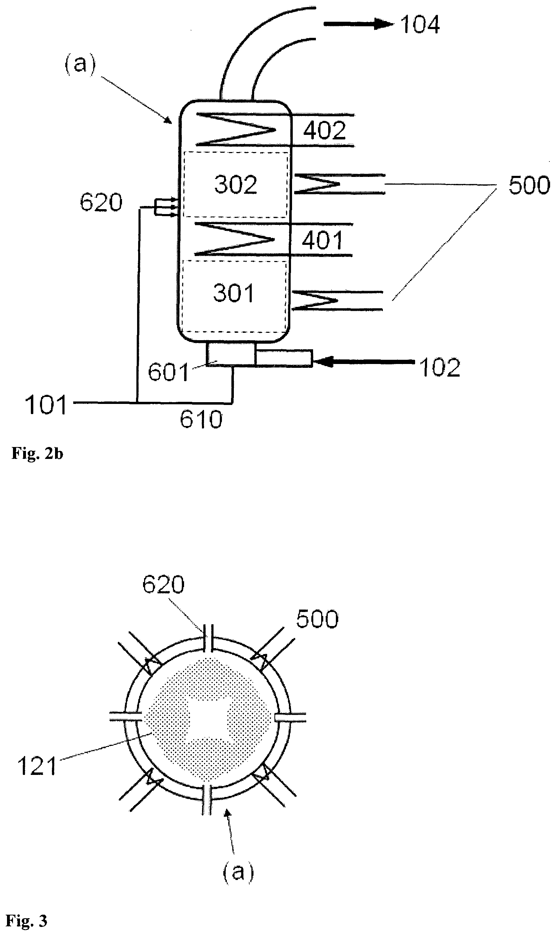

**Figur 2b** zeigt schematisch eine weitere bevorzugte Ausführungsform des Verbrennungsapparats (a). Über einen unteren Einlass (601) wird das O₂-haltige Verbrennungsgas in den Verbrennungsapparat gefördert. Die Zuführung der Schwefelverbindung (101) erfolgt entlang der Strömungsrichtung in zwei aufeinanderfolgenden Verbrennungszonen (301, 302, dargestellt durch gestrichelte Linien). Die Zuführung der Schwefelverbindung (101) erfolgt dabei in der ersten Verbrennungszone zentral in der Zuführung des Verbrennungsgases (601) und in den weiteren Verbrennungszonen jeweils seitlich (620). Stickstoffhaltige Abgase werden vorzugsweise über die untere Zugabestelle (610) dem Verbrennungsapparat zugeführt; schwefelhaltige Abgase, die keinen gebundenen Stickstoff aufweisen, werden vorzugsweise seitlich (620) zugeführt. Die Verbrennungszonen sind nicht-adiabat ausgeführt, was im vorliegenden Fall u.a. durch eine Wandkühlung (500) realisiert wird. Zwischen den Verbrennungszonen ist ferner ein Wärmetauscher zur Kühlung angeordnet (401). Im Anschluss an die letzte Verbrennungszone (302) erfolgt eine weitere Kühlung (402), bevor das Reaktionsgas (104) den Verbrennungsapparat verlässt.
**Figur 3** zeigt einen Querschnitt durch den in Figur 2a und Figur 2b gezeigten Verbrennungsapparat (a) in Höhe der seitlichen Eindüsungsstellen (620) für die Schwefelverbindung (101). Es sind vier Düsen vorhanden, die zu einer fächerförmiges Eindüsung (121) der Schwefelverbindung führen. Die Wandkühlung 500 ist ebenfalls schematisch dargestellt.

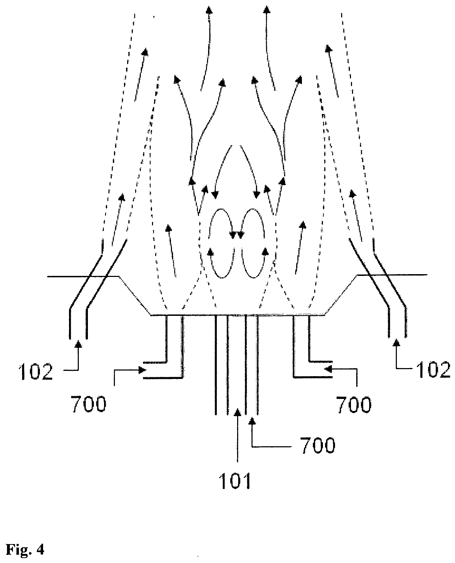

**Figur 4** zeigt schematisch eine bevorzugte Ausführungsform für den Einlass (601) für das Verbrennungsgas (102), durch den auch zentral schwefelhaltige Ausgangsstoffe mit gebundenem Stickstoff zugegeben werden. Diese Ausführungsform ist analog zu einem Low-NOₓ-Brenner ausgeführt, insofern die Zugabe des sauerstoffhaltigen Verbrennungsgases (102) am Brenner direkt gestuft erfolgt. Durch die Zugabe eines Gases (700), das über einen geringeren Anteil an Sauerstoff als das Verbrennungsgas (102) verfügt, wird eine lokale Reduktionszone an der Eindüsungsstelle für den schwefel- und stickstoffhaltigen Ausgangsstoff realisiert.

### Beispiel:

Im Folgenden wird als ein Ausführungsbeispiel das Ergebnis einer numerischen Berechnung zur Herstellung von rund 18 t/h Gew.-96-%iger Schwefelsäure beschrieben. Das Verfahren wird in einer Anlage gemäß Fig. 1 durchgeführt.

Als Edukte werden 6,1 t/h Amin-Acid-Gas mit einer Zusammensetzung von 85 Mol-% H₂S, 7 Mol-% H₂O, 5 Mol-% CO₂ und 3 Mol-% CH₄, 0,8 t/h Sour-Water-Stripping-Gas mit einer Zusammensetzung von 33 Mol-% H₂S, 33 Mol-% H₂O, 33 Mol-% NH₃ und 1 Mol-% CH₄, 0,2 t/h flüssiger, elementarer Schwefel (S₂) (101) und 52 t/h Verbrennungsgas (102) mit einem Massenanteil von 23,3% Sauerstoff und 76,7% Stickstoff einem Verbrennungsapparat (a) mit drei Verbrennungszonen zugeführt. Das Sour-Water-Stripping-Gas wird in die erste Verbrennungszone dosiert, wo es in einer lokalen Reduktionszone verbrannt wird. Elementarer Schwefel wird der letzten Verbrennungszone zugeführt.

Im Verbrennungsapparat findet eine vollständige Oxidation der Edukte statt, so dass am Ausgang der Brennkammer 59,1 t/h SO₂-haltigen Gasgemisches (104) erhalten werden, welches zu 9,0 Mol-% SO₂, 11,4 Mol-% H₂O, 5,1 Mol-% O₂, 0,1 Mol-% CO₂ und 73,7 Mol-% N₂ besteht.

Das SO₂-haltige Gasgemisch wird im Verbrennungsapparat aufgrund der stark exothermen Reaktionen in eingebauten Wärmetauschern gekühlt. Die abgeführte Wärme wird sowohl als Heizmedium für die Desorptionskolonne als auch zur Erzeugung von Heißdampf und überhitztem Dampf zur Stromgewinnung über eine Turbine verwendet. Bei der Verbrennung wird insgesamt eine Wärmemenge von ca. 23 MW frei.

Das SO₂-haltige Prozessgas verlässt den Verbrennungsapparat mit einer Temperatur von 300 bis 350°C und wird nun einer Absorptionsstufe im Gegenstrom mit einer Absorptionsflüssigkeit aus 20 Gew.-% Diethylamin und 80 Gew.-% Wasser (106) aus dem Absorptionsmittel-Holdup (d) geführt. Da es bei Temperaturen unter 300°C zu einer Kondensation von Wasser und Bildung von schwefeliger Säure kommen kann, wird der Gasstrom zunächst in einer Quenche mit Absorptionsflüssigkeit auf ca. 30 °C abgekühlt, bevor er in die Absorptionskolonne (b) geleitet wird.
Die Absorption mit der Diethylamin-Lösung entfernt das Schwefeldioxid aus dem Prozessgasstrom (105) nahezu vollständig bis auf 7 ppm, bevor das Restgas zum Abgassystem gegeben wird (202).

Die mit SO₂ beladende Absorptionsflüssigkeit (107) verlässt die Absorptionskolonne im Sumpf und wird in die Desorptionskolonne (c) gepumpt, welche mit Heißdampf geheizt wird und eine Bodentemperatur von ca. 108 °C hat. In der Kolonne wird der größte Teil des SO₂ wieder aus der Flüssigkeit herausgelöst und verlässt die Kolonne stark aufkonzentriert mit einem Massenstrom von ca. 12,8 t/h und einer SO₂-Kontentration von etwa 88 Gew.-% am Kopf (109). Die Restbeladung an SO₂ in der Absorptionsflüssigkeit liegt bei unter 0,1 Gew.-%. Die Flüssigkeit wird im Kreislauf geführt (108) und zurück in den Holdup (d) gepumpt.

Der Prozessgasstrom (109) für den ersten Röhrenkontaktapparat (e) wird in einem rekuperativen Wärmetauscher mit Hilfe des Produktstromes aus dem Reaktor auf die Eingangsreaktionstemperatur von 400 °C aufgeheizt.

Der für die Oxidation im Röhrenkontaktapparat nötige Sauerstoff (103) wird dem Verfahren hochrein mit einem Sauerstoffanteil von ca. 99,5 Gew.-% zugesetzt. Bevor dieser in die Reaktionsstufen eintritt (115), wird er zuvor noch als Strippgas für die Aufreinigung der produzierten Schwefelsäure in der Strippkolonne (m) verwendet, da die Schwefelsäure aus den Absorptionsstufen noch geringe Mengen an SO₂ gelöst hat, welche im Produkt unerwünscht sind. Die aufgereinigte Schwefelsäure wird nach der Strippkolonne in den Produktlagertank gepumpt (114).

In der ersten Kontaktstufe, die durch einen Röhrenkontaktapparat gebildet wird, wird das im Gasstrom enthaltene SO₂ zu 80% umgesetzt, so dass am Ausgang des Röhrenkontaktapparates ein Gasgemisch (110) bestehend aus 51,7 Mol-% SO₃, 21,7 Mol-% O₂, 12,9 Mol-% SO₂ und sonstigen Bestandteilen mit einer Temperatur von 480°C vorliegt.

Nach Durchströmen des rekuperativen Wärmetauschers zum Vorheizen des Eduktstroms für den Röhrenkontaktapparat wird das Gasgemisch mit einer Temperatur von 246°C zunächst in einem Plattenwärmetauscher auf 60 °C abgekühlt, bevor es einer Rieselfimkolonne (f) zugeführt wird. In dieser Kolonne wird der Anteil an SO₃ im Gasstrom bis auf Spuren von der im Gegenstrom geführten Schwefelsäure (112) absorbiert. Die Säure aus dem Sumpf der Fallfilmkolonne wird über einen Rohrbündelwärmetauscher auf 40 °C abgekühlt und anschließend in die Strippkolonne gepumpt.

Die nicht absorbierten Bestandteile der Gasphase mit einem Massenstrom von noch ca. 4 t/h und einer Zusammensetzung von 58,3 Mol-% O₂, 23,0 Mol-% SO₂, 12,9 Mol-% N₂, sowie minimalen Spuren von sonstigen Bestandteilen weisen eine viel zu hohe Schwefelkonzentration auf um die gesetzlichen Anforderungen zu erfüllen (siehe beispielsweise die Technische Anleitung zur Reinhaltung der Luft, erste allgemeine Verwaltungsvorschrift zum Bundes-Immissionsschutzgesetz der deutschen Bundesregierung) und müssen daher in weiteren Stufen bearbeitet werden. Sie kommen daher zunächst aufgrund der noch hohen SO₂-Konzentration von über 23 Mol.-% in einen weiteren Röhrenkontaktapparat (g) und anschließend in zwei konventionelle Hordenkontaktfestbettreaktoren (i, k). Nach jeder dieser Reaktionsstufen erfolgt eine Absorption mit Schwefelsäure im Gegenstrom.

Der Gasstrom verlässt schließlich den Endabsorber (1) mit einer Schwefeldioxidkonzentration im ppb-Bereich und wird dem Abgassystem (202) zugeführt. Die Schwefelsäure aus dem Boden des Endabsorbers wird im Gegenstrom zum Gasstrom in die folgenden Absorber (h, j, f) gepumpt. Sie verlässt den ersten Fallfilmabsorber mit einer Konzentration von 99,5 Gew.-% und wird in der Stripperkolonne mit dem hochreinen Sauerstoff für den Röhrenkontaktapparat gestrippt.
Die Schwefelsäure wird vom Sumpf der Stripperkolonne in einen Säuretank gepumpt, in dem durch Zugabe von VE-Wasser die gewünschte Säurekonzentration eingestellt werden kann. Aus diesem Säuretank wird sowohl die Produktsäure als auch die Schwefelsäure für die Gegenstromabsorption abgezogen.

### Bezugszeichen:

- 101: ein oder mehrere schwefelhaltige Ausgangsstoffe (AAG, SWSG, SO₂, S₂ (1))
- 102: Verbrennungsgas
- 103: frischer Sauerstoff zur Stripperkolonne
- 104: Rauchgas aus Verbrennungsapparat
- 105: Abgas aus der Absorptionsstufe
- 106: regeneriertes Absorptionsmittel
- 107: SO₂-beladenes Absorptionsmittel
- 108: regeneriertes Absorptionsmittel zum Holdup
- 109: aufkonzentriertes Prozessgas zur ersten Kontaktsstufe
- 110: Prozessgas zur ersten SO₃-Absorptionsstufe
- 111: Abgasstrom aus Endabsorber
- 112: frische Schwefelsäure in Kreislauf-Gegenstromführung
- 113: Schwefelsäure nach Fallfilmkolonne
- 114: Schwefelsäure nach Stripperkolonne (Produktqualität)
- 115: Sauerstoff zur ersten Kontaktstufe
- 201: Produktsäuretanklager
- 202: Schornstein
- 301: Verbrennungszone
- 302: Verbrennungszone
- 303: Verbrennungszone
- 401: Wärmeübertrager
- 402: Wärmeübertrager
- 403: Wärmeübertrager (Überhitzer)
- 500: Wandkühlung
- 601: Einlass für Verbrennungsgas
- 610: Eindüsungsstellen für Schwefelverbindung
- 620: Eindüsungsstellen für Schwefelverbindung
- 700: Gas mit geringerer O₂-Konzentration als Verbrennungsgas
- (a): Verbrennungsapparat
- (b): Absorptionskolonne
- (c): Desorptionskolonne
- (d): Absorptionsmittel-Holdup
- (e): erste Kontaktstufe, Röhrenkontaktapparat
- (f): Fallfilmkolonne
- (g): zweite Kontaktstufe
- (h): 1. Zwischenabsorber
- (i): dritte Kontaktstufe
- (j): 2. Zwischenabsorber
- (k): vierte Kontaktstufe
- (1): Endabsorber
- (m): Stripperkolonne

## Patentansprüche

1. Kontinuierliches Verfahren zur Gewinnung von Schwefelsäure umfassend die Schritte
I. Verbrennen eines schwefelhaltigen Abgases in einem Verbrennungsapparat unter Bildung eines schwefeldioxidhaltigen Prozessgases,
II. Aufkonzentrieren von SO₂,
III. katalytisches Oxidieren von SO₂ zu SO₃ in einer ersten Kontaktstufe,
IV. Absorbieren von SO₃,
V. gegebenenfalls Durchlaufen weiterer Kontaktstufen zur weiteren katalytischen Oxidation von SO₂ zu SO₃ mit gegebenenfalls anschließender Absorption von SO₃,
**dadurch gekennzeichnet, dass** das schwefelhaltige Abgas ein Amine Acid Gas enthält, das aus einer Aminwäsche resultiert und einen Anteil von 80-90 Mol-% H₂S aufweist oder das schwefelhaltige Abgas ein Gas enthält, das aus einem Sour-Water-Stripper resultiert das eine oder mehrere Verbindungen mit gebundenem Stickstoff enthält, wobei die Verbrennung in Schritt I auf mindestens zwei Verbrennungszonen verteilt, die durch Wärmeübertrager voneinander separiert sind, so dass die Maximaltemperatur in einer Verbrennungszone 2000°C nicht übersteigt, und das schwefelhaltige Abgas mit gebundenen Stickstoff in die erste Verbrennungszone dosiert und zur Unterdrückung der Bildung von Stickoxiden unter lokal herrschenden reduzierenden Bedingungen verbrannt wird.

2. Verfahren nach Anspruch 1, **dadurch gekennzeichnet, dass** das Verbrennungsgas in Schritt I Luft ist.

3. Verfahren nach Anspruch 1 oder 2, **dadurch gekennzeichnet, dass** der Schritt II die folgenden Schritte umfasst:
IIa. Absorbieren von Schwefeldioxid aus dem Prozessgas mit Hilfe eines Absorptionsmittels,
IIb. Desorbieren von Schwefeldioxid aus dem Absorptionsmittel.

4. Verfahren nach einem der Ansprüche 1 bis 3, **dadurch gekennzeichnet, dass** dem Absorptionsschritt II zusätzlich schwefeldioxidhaltiges Gas aus einer anderen Quelle als beim Verbrennungsschritt I zugeführt wird.

5. Verfahren nach einem der Ansprüche 1 bis 4, **dadurch gekennzeichnet**, das Prozessgas vor dem Absorptionsschritt auf eine Temperatur im Bereich von 30°C bis 60 °C heruntergekühlt wird.

6. Verfahren nach einem der Ansprüche 1 bis 5, **dadurch gekennzeichnet, dass** zusätzlich zum schwefelhaltigen Abgas ein oder mehrere weitere schwefelhaltige Ausgangsstoffe verbrannt werden, um die Konzentration an Schwefeldioxid vor Eintritt in die erste Kontaktstufe zu erhöhen.

7. Verfahren nach einem der Ansprüche 1 bis 6, **dadurch gekennzeichnet, dass** das der ersten Kontaktstufe zugeführte Gasgemisch Schwefeldioxid und Sauerstoff im Volumenverhältnis von 0,5 bis 1,5, bevorzugt von 0,8 bis 0,9 enthält.

8. Verfahren nach einem der Ansprüche 1 bis 7, **dadurch gekennzeichnet, dass** zumindest die erste Kontaktstufe durch einen Röhrenkontaktapparat gebildet wird.

## Claims

1. A continuous process for producing sulfuric acid, comprising the steps:
I. combusting a sulfur-containing waste gas in a combustion unit to form a sulfur dioxide-containing process gas,
II. concentrating SO₂,
III. catalytically oxidizing SO₂ to SO₃ in a first contact stage,
IV. absorbing SO₃,
V. optionally passing through additional stages for further catalytic oxidation of SO₂ to SO₃, optionally with subsequent absorption of SO₃,
**characterized in that** the sulfur-containing waste gas contains an amine acid gas that results from amine scrubbing and has an H₂S content of 80-90 mol-%, or the sulfur-containing waste gas contains a gas that results from a sour water stripper and contains one or more compounds having bound nitrogen, wherein the combustion in step I is distributed over at least two combustion zones that are separated from one another by heat exchangers so that the maximum temperature in a combustion zone does not exceed 2000°C, and the sulfur-containing waste gas with bound nitrogen is metered into the first combustion zone and is combusted under locally prevailing reducing conditions to suppress the formation of nitrogen oxides.

2. The process according to Claim 1, **characterized in that** the combustion gas in step I is air.

3. The process according to Claim 1 or 2, **characterized in that** step II comprises the following steps:
IIa. absorbing sulfur dioxide from the process gas by means of an absorption medium,
IIb. desorbing sulfur dioxide from the absorption medium.

4. The process according to one of Claims 1 to 3, **characterized in that** absorption step II is additionally supplied with sulfur dioxide-containing gas from some other source than in combustion step I.

5. The process according to one of Claims 1 to 4, **characterized in that** process gas is cooled to a temperature in the range of 30°C to 60°C prior to the absorption step.

6. The process according to one of Claims 1 to 5, **characterized in that** in addition to the sulfur-containing waste gas, one or more further sulfur-containing starting materials are combusted in order to increase the concentration of sulfur dioxide prior to entry into the first contact stage.

7. The process according to one of Claims 1 to 6, **characterized in that** the gas mixture supplied to the first contact stage contains sulfur dioxide and oxygen in a volume ratio of 0.5 to 1.5, preferably 0.8 to 0.9.

8. The process according to one of Claims 1 to 7, **characterized in that** at least the first contact stage is formed by a tube contact apparatus.

## Revendications

1. Procédé continu de récupération d'acide sulfurique, comprenant les étapes suivantes :
I. combustion d'un gaz d'échappement contenant du soufre dans un appareil de combustion avec formation d'un gaz de processus contenant du dioxyde de soufre,
II. concentration du SO₂,
III. oxydation catalytique du SO₂ en SO₃ dans un premier étage de mise en contact,
IV. absorption du SO₃,
V. le cas échéant, passage par d'autres étages de mise en contact pour poursuivre l'oxydation catalytique du SO₂ en SO₃ avec, le cas échéant, absorption consécutive du SO₃,
**caractérisé en ce que** le gaz d'échappement contenant du soufre contient un gaz acide aminé qui résulte d'un lavage aux amines et présente une proportion de 80 à 90 % en moles de H₂S ou le gaz d'échappement contenant du soufre contient un gaz qui résulte d'un strippage d'eau acide et contient un ou plusieurs composés avec de l'azote lié, la combustion à l'étape I étant répartie sur au moins deux zones de combustion qui sont séparées l'une de l'autre par des échangeurs de chaleur, de sorte que la température maximale dans une zone de combustion ne dépasse pas 2 000 °C, et le gaz d'échappement contenant du soufre avec de l'azote lié étant dosé dans la première zone de combustion et brûlé dans les conditions réductrices régnant localement pour inhiber la formation d'oxydes d'azote.

2. Procédé selon la revendication 1, **caractérisé en ce que** le gaz de combustion à l'étape I est de l'air.

3. Procédé selon la revendication 1 ou 2, **caractérisé en ce que** l'étape II comprend les étapes suivantes :
IIa. absorption du dioxyde de soufre provenant du gaz de processus à l'aide d'un moyen d'absorption,
IIb. désorption du dioxyde de soufre du moyen d'absorption.

4. Procédé selon l'une des revendications 1 à 3, **caractérisé en ce qu'**à l'étape d'absorption II du gaz contenant du dioxyde de soufre provenant d'une autre source qu'à l'étape de combustion I est amené en plus.

5. Procédé selon l'une des revendications 1 à 4, **caractérisé en ce que** le gaz de processus est refroidi à une température dans la plage de 30 °C à 60 °C avant l'étape d'absorption.

6. Procédé selon l'une des revendications 1 à 5, **caractérisé en ce qu'**en plus du gaz d'échappement contenant du soufre, une ou plusieurs autres matières premières contenant du soufre sont brûlées pour augmenter la concentration en dioxyde de soufre avant l'entrée dans le premier étage de mise en contact.

7. Procédé selon l'une des revendications 1 à 6, **caractérisé en ce que** le mélange gazeux amené au premier étage de mise en contact contient du dioxyde de soufre et de l'oxygène dans un rapport des volumes de 0,5 à 1,5, de préférence de 0,8 à 0,9.

8. Procédé selon l'une des revendications 1 à 7, **caractérisé en ce qu'**au moins le premier étage de mise en contact est formé par un appareil de mise en contact à tube.
